Europäisches Patentamt

European Patent Office

Office européen des brevets

(19)

(11) Publication number: **0 133 592**

A2

(12) **EUROPEAN PATENT APPLICATION**

(21) Application number: **84201128.0**

(22) Date of filing: **01.08.84**

(51) Int. Cl.⁴: **H 04 N 9/65**
**H 04 N 5/40**

(30) Priority: **04.08.83 DE 3328025**

(43) Date of publication of application:
**27.02.85 Bulletin 85/9**

(84) Designated Contracting States:
**FR GB**

(71) Applicant: **N.V. Philips' Gloeilampenfabrieken**
**Groenewoudseweg 1**
**NL-5621 BA Eindhoven(NL)**

(72) Inventor: **Heller, Arthur**
**c/o INT. OCTROOIBUREAU B.V. Prof. Holstlaan 6**
**NL-5656 AA Eindhoven(NL)**

(72) Inventor: **Gierlinger, Friedrich**
**c/o INT. OCTROOIBUREAU B.V. Prof. Holstlaan 6**
**NL-5656 AA Eindhoven(NL)**

(72) Inventor: **Schaumberger, Alfred**
**c/o INT. OCTROOIBUREAU B.V. Prof. Holstlaan 6**
**NL-5656 AA Eindhoven(NL)**

(74) Representative: **Minczeles, Roger et al,**
**INTERNATIONAAL OCTROOIBUREAU B.V. Prof.**
**Holstlaan 6**
**NL-5656 AA Eindhoven(NL)**

(54) **Method of producing a modulated chrominance signal with suppressed carrier and colour carrier modulator arrangement for performing the method.**

(57) A method of producing a modulated chrominance signal with suppressed carrier. A square-wave carrier signal and a colour information signal in the form of a sequence of digitally enclloded amplitude values are applied to a modulator arrangement. The clock frequency for the amplitude values is an integral multiple of the colour carrier frequency and is phase-locked thereto. Each bit of the amplitude values is inverted during one half cycle of the carrier and not inverted in the subsequent half cycle. A first and a second value, respectively are added to the values obtained thus, these first and second values being calculated such that also for input and/or output signal values which are located at a distance from the drive mean values at the input and output ends a total carrier suppression is achieved for the desired input signal level. The modulated analog chrominance signal is available after digital-to-analog conversion.

Croydon Printing Company Ltd

"Method of producing a modulated chrominance signal with
suppressed carrier and colour carrier modulator arrange-
ment for performing the method."


The invention relates to a method of producing
a modulated chrominance signal with suppressed carrier with
the aid of a modulator arrangement to which a carrier signal
to be modulated and a modulating colour information signal
are applied.

Generally known modulators with carrier suppression have for their object, for example in a PAL encodier,
to produce the ultimate chrominance signal from the colour
difference signals U and V and the applied colour carrier,
to which the luminance signal is then added. A further
field of usage is the generation of test line signals which
are also formed correspondingly from luminance signal components and superimposed chrominance signals (20T-pulse,
delayed step).

In both fields of usage a high stability with
time is required for the modulation process. It is of prime
importance that for each signal level of U and V (= envelopes) which produce a "colourless" picture element, the
carrier is suppressed reliably at themodulator output.

Faulty carrier suppression results in colour
fog in colourless picture portions or otherwise in colour
errors in coloured portions. With test line generators
such instabilities or carrier residues produce impermissible measuring signal distortions, which renders an accurate measurement impossible.

In accordance with the prior art, colour carrier
modulators may be constructed as analog ring modulators
(double-sideband modulators with carrier suppression). This
requires a great deal of efforts and cost to obtain the
required symmetry and temperature compensation in order
to accomplish the required level stability and carrier
suppression. This holds to a still greater extent for test
line generators.

The invention has for its object to provide a
method of the type set forth in the opening paragraph,
with which with comparatively low constructional cost and
design efforts and whilst avoiding elaborate adjusting
procedures extremely stable levels and a reliable suppression of unwanted colour carrier portions are guaranteed.
To that end the method according to the invention is
characterized in that the carrier signal is applied in
the form of a square-wave signal and the modulating signal
as a sequence of digital amplitude values, each encoded
in $\underline{m}$ bits, to the modulator arrangement, the repetition
frequency of these amplitude values corresponding to an
integral multiple of the frequency of the carrier signal
and being phase-locked thereto, that each bit of the digitally encoded amplitude value is inverted during one
half cycle of the carrier signal and is not inverted during
the subsequent half cycle, that each bit thus obtained
is added to a signal which has the value $W_i$ " $2A_x + 1 + Y-Z$
for the duration of the inverting mode and the value
$W_n = Y-Z$ during the non-inverting mode, and that the
digital signal obtained by means of this adding operation
is converted into an analog signal for producing the modulated chrominance signal, the full carrier suppression
at the modulator output being achieved for the amplitude
value $\underline{A}_x$ which is situated with a different $\underline{Y}$ from the
drive mean value at the input side of the modulator arrangement, and the output signal level with suppressed
carrier then produced being situated with a difference $\underline{Z}$
from the drive mean value at the output side of the modulator arrangement.

The invention also relates to a colour carrier
modulator arrangement for performing the method, a first
embodiment of the arrangement being characterized in that
it comprises means for applying each bit of the digitally
encoded amplitude value to a corresponding first input of
a binary adder $\underline{via}$ a logic element which is switched by
the carrier signal between the inverting and the non-inverting switching states, a carrier signal-controlled change-over device which is connected to a second input of the binary adder being provided to apply alternately the values $W_i$ and $W_n$ thereto, m outputs of the binary adder being connected to the inputs of a digital-to-analog converter.

In a second, preferred embodiment of the invention the colour carrier modulator arrangement is characterized in that it comprises means for applying the digitally encoded amplitude values and the carrier signal to m+1 address lines of a programmable read-only memory, m data output lines of the read-only memory being connected to the inputs of a digital-to-analog converter, the output value for the amplitude value $A_x$ being programmed in this memory for full carrier suppression.

Advantageously, the colour carrier modulator arrangement is then further characterized in that also for amplitude values which differ less than a selectable amount from the amplitude value $A_x$ the output value is programmed in the read-only memory for full carrier suppression.

The invention will now be described in greater detail by way of example with reference to the accompanying drawing, in which:

Figure 1 is a schematical representation of the digital input and output signals of the modulator arrangement provided in accordance with the invention and their relationship to each drive mean value;

Fig. 2 is a general block diagram of a first embodiment of the modulator arrangement according to the invention;

Figure 3 shows the block diagram of a second embodiment of the modulator arrangement according to the invention;

Figure 4 shows schematical representations of the characteristics programming in the read-only memory of Figure 3 and of the function of the modulation procedure, and

Figure 5 is a representation as in Figure 4, the characteristics programming having been somewhat altered.

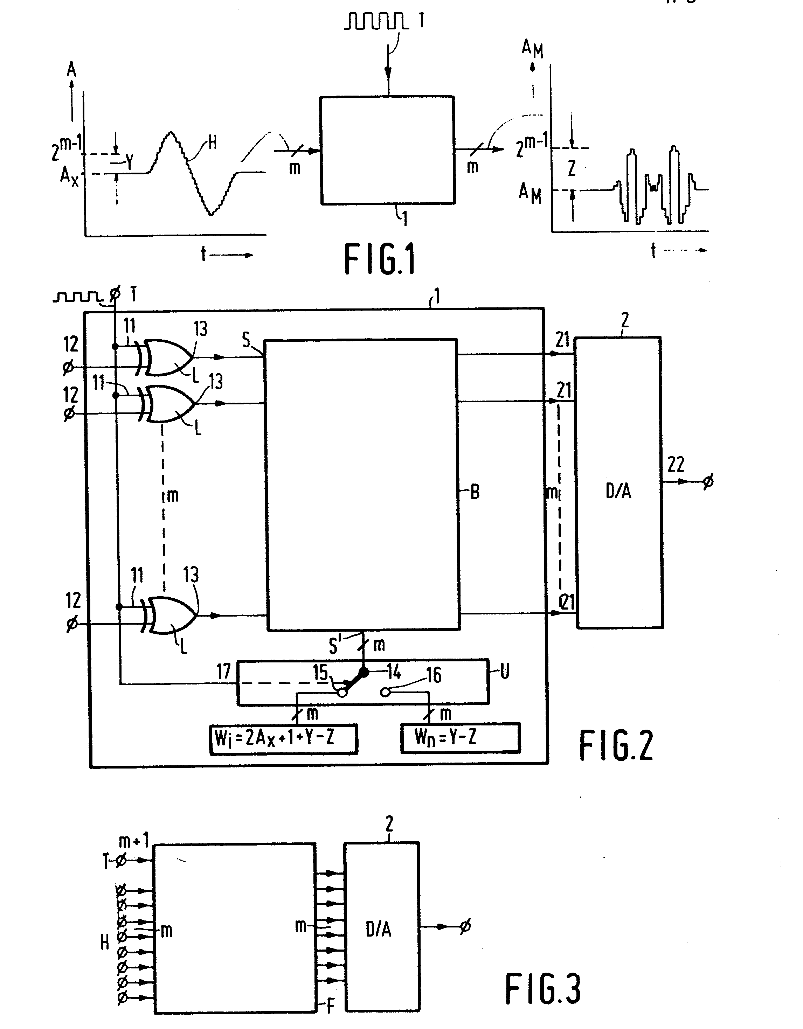

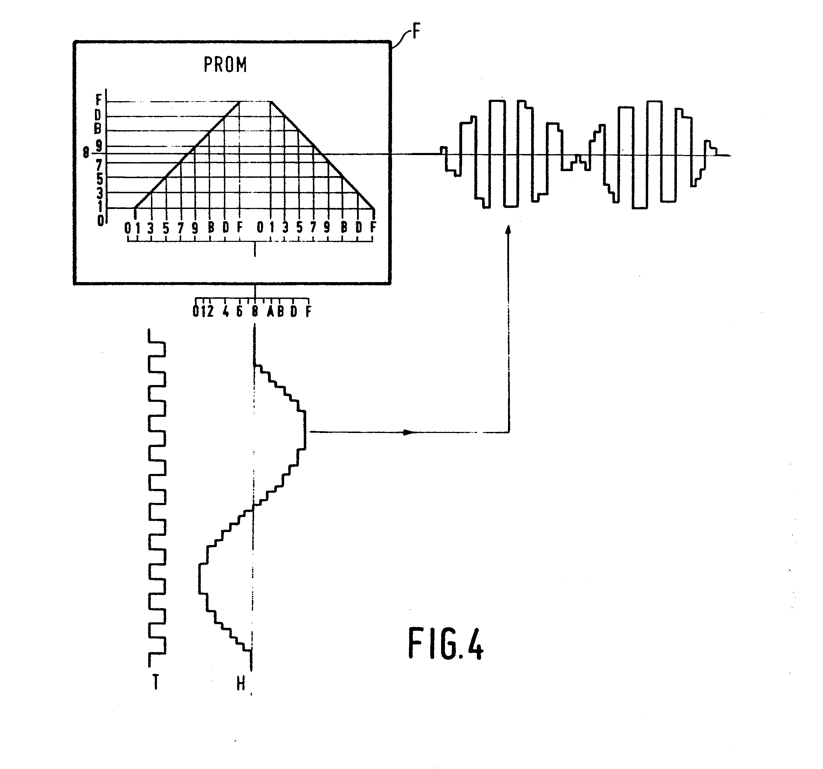

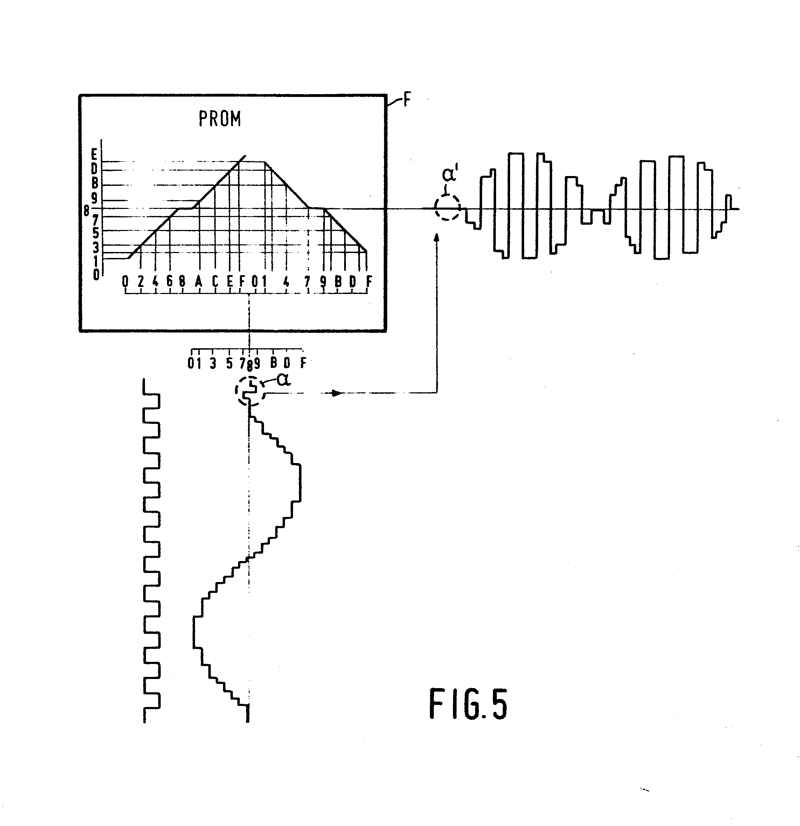

Figure 1 shows the first step in the solution according to the inventive idea, namely the application to a modulator arrangement 1 of digital or digitized signals, that is to say a carrier T in the form of a square-wave signal to one input and an envelope H of a modulating colour information signal in the form of an $\underline{m}$-bit long word sequence to a further input of the modulator arrangement 1. An $\underline{m}$-bit long output word sequence is then available at the output of this modulator arrangement. In Figure 1 the digital input and output word sequences, respectively are shown as equivalent analog value sequences. The digitally encoded amplitude values of the signal H are clocked by means of an integral multiple of the frequency of the carrier T, the repetition frequency of the clock signal being phase-locked thereto. After conversion of the output word sequence in a D/A converter 2 (see Figure 2), a time and amplitude-continuous output signal is produced from the output signal of Figure 1, which is shown as quantized, $\underline{via}$ a filter, not shown. The same holds of course also for the output signals shown in Figures 4 and 5. Figure 1 also shows the value $A_x$, which is a predetermined input amplitude value for which the full carrier suppression is achieved and which is situated with a difference Y from the drive mean value at the input side. The output amplitude value $A_m$ with suppressed carrier then produced is situated with a deviation Z from the drive mean value at the output side. For both drive mean values the quantity $2^{m-1}$ has been taken, but $2^{m-1}-1$ might alternatively have been taken. Y and Z are of importance for the conception, described hereinafter, of the digital modulator. Generally, for the benefit of an optimum drive and consequently an optimum resolution, the deviations Y and Z, respectively will be made equal to zero, if possible, or at least very small, but on the other hand they are considered to be different from zero in all examples because of the required generally validity.

The digital modulator arrangement shown schematically in Figure 2 corresponds to the block 1 in Figure 1.

The digital double-sideband modulation with carrier suppression is then effected as follows:

First the digitally encoded envelope signal - represented by the m-bit long word sequence - is reflected from the drive mean value $2^{m-1}$ in each second half-cycle of the carrier T. This is effected by m logic elements L which are alternately switchable by means of their control inputs 11 on which the carrier T is impressed into the inverting or the non-inverting switching states between their inputs 12, to which the modulating signal is applied, and their outputs 13. EXCLUSIVE-OR or EXCLUSIVE-NOR gates are very suitable for use as the logic elements L.

The envelope signal thus reflected at the outputs 13 of the logic elements L would, if it were applied to a D/A converter, be already a double-sideband modulated signal, although it would be reset with a plurality of imperfections and restrictions. First the deviations Y and Z must be zero, but also then a full carrier suppression would not be obtained, the best possible result being a residual carrier of one least significant bit for an envelope value $A_x \triangleq 2^{m-1}$. (By respectively reflecting or inverting $A_x = 2^{m-1}$, the value $\overline{A}_x = 2^{m-1}-1$ is produced, which differs from $A_x$ by 1). Assuming Y and Z to have zero values, to correct for this residual carrier the value 1 must be added in each inverting state of the logic element L to its output 13 and the value 0 in each non-inverting phase. If in contrast therewith Y and/or Z are assumed to differ from zero, then in accordance with a comprehensive calculation, not shown further, the values $W_i = 2 A_x + 1 + Y-Z$ as the term to be added for the inverting phase and $W_n = Y-Z$ as the term to be added for the non-inverting phase of the logic elements L are obtained for a complete suppression of the carrier excess value occurring when adding by $W_i$ ($bit_{m+1}$ in the sum) need not be further taken account of.

In the practical implementation of Figure 2, an m-pole change-over switch U on whose control input 17 the carrier T is impressed, is used for the alternate application of the two terms $W_i$ or $W_n$ _via_ its respective
inputs 15 and 16, whereas its master contact 14 is connected to an adding input S' of a binary adder B. A further adding input S of the binary adder B is connected to
the alternately reflected or non-reflected envelope signal, respectively at the outputs 13 of the logic element L.
The $\underline{m}$ data output lines of the binary adder B are connected
to the corresponding inputs 21 of the D/A converter 21
at whose output 22 the modulated envelope signal with
fully suppressed carrier is available _via_ a filter, not
shown.

       Finally, Figure 2 shows that a digital control
circuit is involved which influences $\underline{m}$ output signals by
means of $\underline{m+1}$ controlling input lines. Since this is a switching arrangement without memories and feedbacks, an arrangement equivalent to Figure 2 can be realised with a
programmable read-only memory F. This equivalent, but
considerably less expensive realisation of a modulator is
shown schematically in Figure 3. This requires, for example,
a PROM having a length of $\underline{m}$ bits with at least $\underline{m+1}$ address
lines, so, for example, for m=8 a 4096-bit PROM in a
512 x 8 condifuration, such as, for example, types
82 S 140, 82 S 147 or similar types. The wiring diagram
of such a read-only memory can be seen from Figure 3,
more specifically this Figure shows that both the $\underline{m}$
digitally encoded envelope signals and the carrier signal
T are applied to the $\underline{m+1}$ address lines and the $\underline{m}$ data
output lines of the memory F are applied to the inputs
of the D/A converter 2.

       The programming mode is obvious from the functions
and formulae, respectively, shown in Figure 2, for the
switched terms S and S'. This is also shown in still
greater detail in Figure 4. From Figure 4 it can be seen
that one of two memory halves are activated alternately
by the carrier signal T, more specifically that one half
is activated when the carrier signal is high, whereas the
other half is activated when the carrier signal is low, and
that in each of these memory halves mutually opposite linear characteristics which compensate for the deviations Y and Z and suppress the carrier residues are programmed.

A special modification of the two characteristics of Figure 4 is shown in Figure 5. It has for its object to so process small predetermined signal levels $\Delta$ around the drive zero point $A_x$, for example interfering signals, noise ($\alpha$) etc. that also for them a full carrier suppression($\alpha'$) at the modulator is achieved. This is effected by programming a corresponding bend in the two characteristics, or put in a simpler way, by having the envelope values $A_x + \Delta$ and $A_x - \Delta$ to act thus on the memory output in exactly the same manner as the (actually only carrier-suppressing) value $A_x$.

1. A method of producing a modulated chrominance signal with suppressed carrier with the aid of a modulator arrangement to which a carrier signal to be modulated and a modulating colour information signal are applied, characterized in that the carrier signal is applied in the form of a square-wave signal and the modulating signal as a sequence of digital amplitude values, each encoded into $m$ bits, to the modulator arrangement, the repetition frequency of these amplitude values corresponding to an integral multiple of the frequency of the carrier signal and being phase-locked thereto, that each bit of the digitally encoded amplitude value is inverted during one half cycle of the carrier signal and is not inverted during the subsequent half cycle, that each bit thus obtained is added to a signal which has the value $W_i = 2A_x + 1 + Y-Z$ for the duration of the inverting mode and the value $W_n = Y-Z$ during the non-inverting mode, and that the digital signal obtained by means of this adding operation is converted into an analog signal for producing the modulated chrominance signal, the full carrier suppression at the modulator output being achieved for the amplitude value $A_x$ which is situated with a difference $Y$ from the drive mean value at the input side of the modulator arrangement, and the output signal level with suppressed carrier then produced being situated with a difference $Z$ from the drive mean value at the output side of the modulator arrangement.

2. A colour carrier modulator arrangement for performing the method claimed in Claim 1, characterized in that it comprises means for applying each bit of the digitally encoded amplitude value to a corresponding first input of a binary adder *via* a logic element which is switched by the carrier signal between the inverting and the non-inverting switching states, a carrier signal-controlled change-over device which is connected to a second input of the binary adder being provided to apply alternately the values $W_i$ and $W_n$ thereto, $\underline{m}$ outputs of the binary adder being connected to the inputs of a digital-to-analog converter.

3.     A colour carrier modulator arrangement for performing the method as claimed in Claim 1, characterized in that it comprises means for applying the digitally encoded amplitude values and the carrier signal to $\underline{m+1}$ address lines of a programmable read-only memory, $\underline{m}$ data lines of the read-only memory being connected to the inputs of a digital-to-analog converter, the output value for the amplitude value $A_x$ being programmed in this memory for full carrier suppression.

4.     A colour carrier modulator arrangement as claimed in Claim 3, characterized in that also for amplitude values which differ less than a selectable amount from the amplitude value $A_x$ the output value is programmed in the read-only memory for full carrier suppression.

FIG.1

$$W_i = 2A_x + 1 + Y - Z$$

$$W_n = Y - Z$$

FIG.2

FIG.3

FIG.4

0133592

FIG.5